# FASCICULE DE BREVET EUROPEEN

(11) **EP 1 389 330 B1**
(45) Date de publication et mention de la délivrance du brevet: **28.06.2006**
(21) Numéro de dépôt: 02740522.4
(22) Date de dépôt: 26.04.2002
(51) Int. Cl.: G07C 9/00, B60R 25/04, G06K 19/07

(54) **Procédé de communication entre un badge et un véhicule automobile**
Verfahren zur Kommunikation zwischen einer Karte und einem Kraftfahrzeug
Communication method between a badge and a motor vehicle

(30) Priorité: 21.05.2001 FR 0106638
(43) Date de publication de la demande: 18.02.2004
(73) Titulaire: Siemens VDO Automotive S.A.S., 31036 Toulouse Cédex 01 (FR)
(72) Inventeur: LEFAURE, Philippe, F-31450 Montbrun (FR)
(86) Numéro de dépôt international: PCT/EP2002/004620
(87) Numéro de publication internationale: WO 2002/095690

(56) Documents cités:
- EP-A- 0 575 013
- EP-A- 0 848 123
- EP-A- 1 053 919
- FR-A- 2 767 595
- FR-A- 2 779 847
- GB-A- 2 353 180

## Description

La présente invention concerne un procédé de communication entre un badge et un véhicule automobile équipé d'un système mains libres.

Un système mains libres permet d'accéder à son véhicule et de démarrer celui-ci sans avoir à utiliser de clé mécanique. L'utilisateur du véhicule est alors simplement muni d'un badge qui se présente sous la forme d'une carte électronique. Ce badge est détecté et reconnu par un dispositif de commande et de gestion associé à des antennes disposées à bord du véhicule. Si le badge est identifié par le dispositif de commande et de gestion comme étant un badge autorisé pour le véhicule, le porteur du badge peut pénétrer à l'intérieur du véhicule en saisissant simplement une poignée de portière et démarrer le moteur du véhicule par simple action sur un bouton.

Plus généralement, pour un tel système mains libres, un groupe d'antennes est destiné à détecter la présence du badge à l'extérieur du véhicule et un autre à l'intérieur de celui-ci. Ces antennes sont destinées à émettre en direction du badge un signal LF (Low Frequency ou basse fréquence) d'une fréquence typiquement de l'ordre de 125 kHz. Ces antennes ont une portée faible, généralement de l'ordre du mètre. Il est ainsi possible, de façon connue, de localiser un badge à l'intérieur, ou à l'extérieur, du véhicule.

Pour localiser un badge, un groupe d'antennes, par exemple les antennes intérieures, émettent un signal LF. Lorsqu'un badge situé à l'intérieur du véhicule reçoit ce signal, il y répond en envoyant un message RF (Radio Fréquence) typiquement d'une fréquence de 433 MHz.

Ainsi le badge est équipé d'un récepteur LF, d'un émetteur RF tandis que le véhicule est équipé d'émetteurs LF et d'un récepteur RF. Un seul récepteur RF est nécessaire car la portée du signal RF émis par le badge est de l'ordre de la dizaine de mètres et tout le véhicule peut être couvert.

L'inconvénient du procédé de communication décrit ci-dessus est que les antennes émettrices LF à l'intérieur du véhicule ne couvrent pas toujours tout l'habitacle de celui-ci. En effet, en fonction parfois du chargement du véhicule et compte tenu de la faible portée des signaux LF, des zones d'ombre de réception LF peuvent exister à l'intérieur de l'habitacle. Ainsi, malgré la présence d'un badge dans le véhicule, celui-ci n'étant pas détecté, des fonctionnalités, par exemple le démarrage du véhicule, peuvent être refusées. Le système décrit ci-dessus peut également localiser un badge dans l'habitacle du véhicule et ne pas "voir" un badge se trouvant dans une zone d'ombre. Le véhicule pourra alors être condamné et décondamné classiquement malgré la présence à l'intérieur du véhicule d'un badge. Si ce badge est visible depuis l'extérieur, une personne mal intentionnée peut alors par effraction prendre le badge et se saisir du véhicule.

Le document EP 0 848 123 décrit un système d'ouverture mains libres pour un véhicule. Dans ce système un badge est muni d'un émetteur de radio fréquence et d'un émetteur / récepteur de basse fréquence. Le véhicule est, quant à lui, muni d'un récepteur de radio fréquence et d'un émetteur / récepteur de basse fréquence, mais il n'est muni d'aucun émetteur de radio fréquence.

La présente invention a alors pour but de fournir un procédé de communication entre le badge et le véhicule permettant de localiser de façon fiable un badge à l'intérieur de celui-ci.

A cet effet, le procédé qu'elle propose est un procédé de communication entre un badge et un véhicule selon lequel un émetteur de faible portée associé au véhicule émet un signal de type LF en direction du badge qui répond en envoyant un signal de type RF de plus grande portée en direction du véhicule. Un signal de faible portée peut être considéré ici comme un signal ne couvrant pas tout l'habitacle du véhicule tandis que le signal de plus grande portée couvre tout l'habitacle et tout le véhicule.

Selon l'invention, un récepteur du badge destiné à recevoir un signal de type RF est mis en veille selon un rythme prédéterminé et un émetteur associé au véhicule envoie pendant une phase de veille du badge un signal de type RF auquel le badge répond par un signal de type RF.

De cette manière, le signal émis par le véhicule pour identifier un badge est un signal de grande portée et tous les badges se trouvant dans le véhicule reçoivent ce signal et sont en mesure d'y répondre.

Dans un exemple de mise en oeuvre d'un procédé selon l'invention, le récepteur RF du badge est en veille en permanence. On peut également prévoir que le badge est alternativement en veille pour recevoir des signaux de type LF puis des signaux de type RF.

Selon une variante de mise en oeuvre, le procédé de communication selon l'invention peut comporter les étapes suivantes :
- émission d'un signal de type LF par un émetteur correspondant du véhicule,
- réception du signal de type LF par un badge déclenchant la mise en veille du récepteur RF du badge,
- émission d'un signal de type RF par un émetteur correspondant du véhicule, ce signal étant porteur d'une question posée au badge en vue de l'identification de ce dernier,
- envoi d'une réponse avec un signal de type RF du badge vers le véhicule.

Dans ce procédé, on peut prévoir que le signal de type LF émis par le véhicule contient une information permettant d'identifier le véhicule. De cette manière, le badge ne se met pas en veille RF dès qu'il reçoit un signal de type LF mais uniquement lorsqu'il reçoit un signal de type LF du véhicule correspondant. Le signal de type LF est par exemple émis par le véhicule suite à une commande de condamnation, de décondamnation ou de démarrage.

Durant les phases de roulage du véhicule, une recherche des divers badges présents dans le véhicule peut être réalisée en émettant un signal de type RF par un émetteur correspondant du véhicule, ce signal étant porteur d'une question posée au badge en vue de l'identification de ce dernier. Le badge répond alors par l'émission d'un signal de type RF porteur d'une réponse à la question reçue.

La présente invention propose aussi un procédé de gestion de la présence de badges dans un véhicule, selon lequel le véhicule émet à l'intérieur du véhicule un signal de type LF et selon lequel en réponse à ce signal, chaque badge ayant capté le signal de type LF émis émet à son tour un signal de type RF, ce signal comportant des informations permettant d'identifier le badge correspondant. Selon l'invention, ce procédé comporte en outre les étapes suivantes :
- mémorisation de la liste des badges ayant répondu suite à une localisation de badge par envoi d'un signal de type LF,
- émission d'un signal de type RF par un émetteur correspondant du véhicule, ce signal étant porteur d'une question posée au badge en vue de l'identification de ce dernier,
- envoi d'une réponse avec un signal de type RF du badge vers le véhicule,
- comparaison de la liste des badges identifiés par l'identification de type RF/RF avec la liste des badges mémorisée.

Dans ce procédé de gestion, un signal est avantageusement donné au conducteur du véhicule s'il apparaît lors de l'identification de type RF/RF des badges non mémorisés. Pour éviter la détection de badges se trouvant à proximité immédiate du véhicule sans être dans le véhicule, ce procédé de gestion prévoit que l'identification de badges de type RF/RF n'est réalisée que lors des phases de roulage du véhicule.

La présente invention concerne aussi un badge électronique destiné à permettre l'accès mains libres à un véhicule automobile comportant un récepteur d'ondes de type LF et un émetteur d'ondes de type RF, caractérisé en ce qu'il comporte également un récepteur d'ondes de type RF. Un tel badge est adapté à la mise en oeuvre des procédés de communication décrits plus hauts.

Les détails et avantages de la présente invention ressortiront mieux de la description qui suit faite en référence au dessin schématique annexé sur lequel :
Figure 1 représente schématiquement un véhicule automobile en vue de dessus,
Figure 2 représente schématiquement un procédé de communication préalable à une décondamnation du véhicule,
Figure 3 représente schématiquement un procédé de communication pour le suivi de badges dans le véhicule.

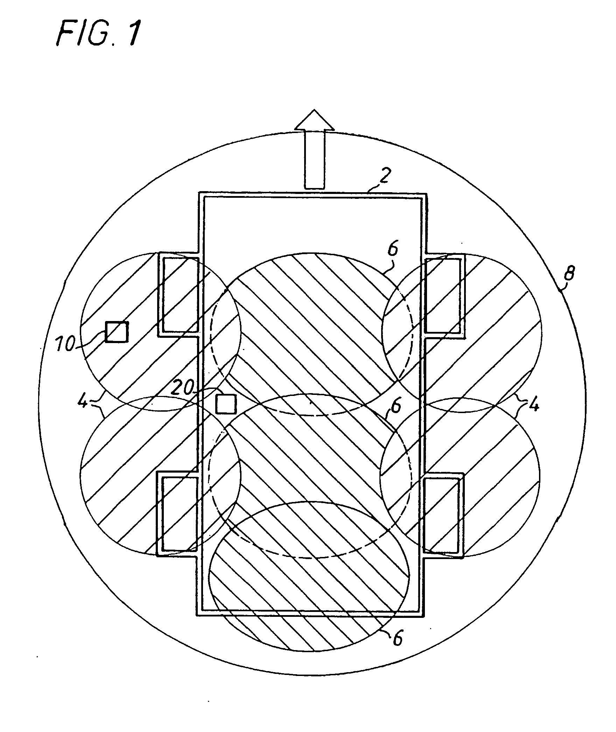

Sur la figure 1, on a représenté les différentes zones couvertes par des antennes émettrices LF (Low Frequency ou basse fréquence) ainsi que par une antenne RF (Radio Fréquence) associées au véhicule 2.

On distingue deux groupes d'antennes LF. Un premier groupe d'antennes appelées par la suite antennes extérieures comprend quatre antennes disposées au niveau des poignées extérieures des portières du véhicule 2. La portée de chacune de ces antennes est symbolisée sur le dessin annexé par un cercle hachuré 4. Le second groupe d'antennes, appelées antennes intérieures, comprend trois antennes disposées dans l'habitacle du véhicule, par exemple sur le plancher de l'habitacle. La portée de chacune de ces trois antennes est symbolisée au dessin par un ovale 6 hachuré.

Enfin, l'antenne RF est disposée dans l'habitacle du véhicule 2 et a une portée symbolisée par un grand cercle 8 sur le dessin. La portée d'émission de l'antenne RF est de l'ordre de la dizaine de mètres, par exemple environ 30 m, tandis que la portée d'émission des antennes LF est de l'ordre du mètre, par exemple 1 m.

Les signaux émis par les antennes LF, extérieures et intérieures, ont par exemple une fréquence de 125 kHz tandis que les signaux émis par l'antenne RF ont une fréquence de 433 MHz.

Toutes les indications données ci-dessus quant au nombre d'antennes, quant à leur position, quant à leur portée ou à leur fréquence d'émission sont données à titre indicatif.

Sur la figure 1, un premier badge 10 a été représenté par un carré. Ce badge se trouve à l'extérieur du véhicule, par exemple dans la poche d'un conducteur.

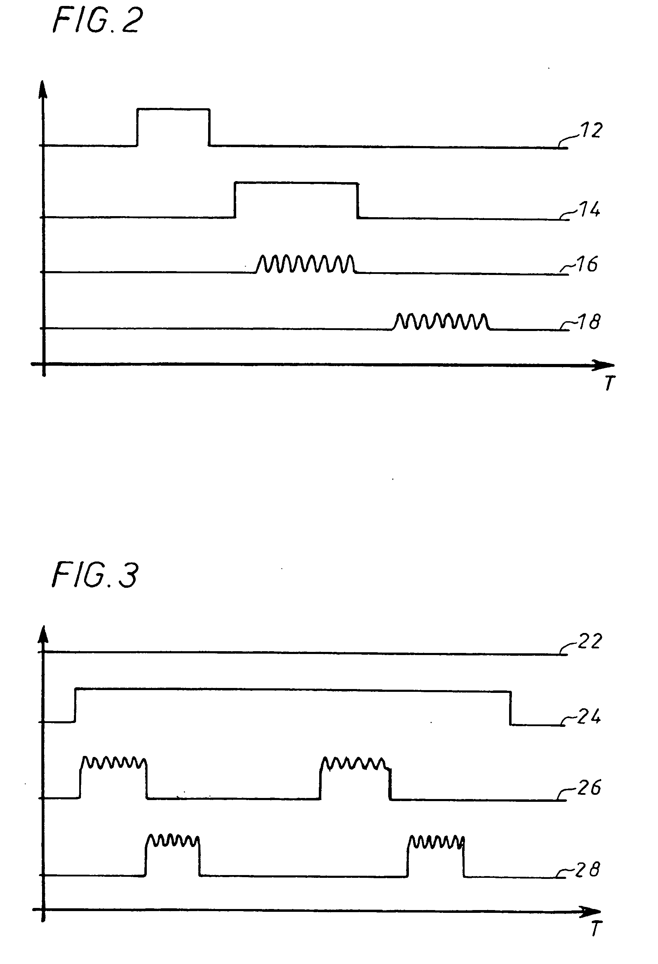

Le procédé de communication entre le premier badge 10 et le véhicule est schématisé sur la figure 2. Au bas de cette figure, on a symbolisé l'axe des temps T. Une première ligne 12 représente schématiquement un signal émis par les antennes LF extérieures. On constate que le premier badge 10 se trouve dans une zone d'émission 4 d'une antenne extérieure.

Lorsque le conducteur portant le badge 10 sollicite l'ouverture d'une portière, un dispositif de gestion du système mains libres de ce véhicule commande l'émission d'un signal LF par les antennes extérieures. Ce signal est symbolisé par la courbe 12.

En réponse à ce signal, le badge 10 met son récepteur RF en veille. Ceci est symbolisé par la courbe 14 de la figure 2. On peut prévoir que le signal LF émis par les antennes extérieures contient un challenge. De cette manière, le récepteur RF du badge 10 ne se met alors en veille que si le signal LF reçu est un signal émis par le véhicule correspondant. Il peut s'agir d'un challenge simple ne comportant par exemple que trois octets d'information.

Le récepteur RF du badge 10 étant en veille, il est prêt à recevoir le challenge émis alors par l'émetteur RF du véhicule 2. La courbe 16 représente les signaux émis par cet émetteur RF. Lorsque le challenge, appelé aussi parfois code, est reçu par le badge, le récepteur RF du badge 10 se rendort. La partie émettrice RF du badge 10 se met alors en veille et répond au dispositif de gestion du système mains libres. Si la réponse envoyée par le badge 10 correspond au challenge émis par l'antenne RF du véhicule, alors la portière du véhicule sera décondamnée.

Une procédure similaire pourrait être mise en oeuvre pour démarrer le véhicule. Dans ce cas, le signal LF est alors émis par les antennes intérieures et non plus par les antennes extérieures qui restent muettes.

De telles procédures sont basées sur le principe d'une double communication en voie montante, c'est-à-dire du véhicule vers le badge, l'une LF permettant de localiser le badge et l'autre RF dont le rôle est de transmettre les données du challenge. La voie descendante, c'est-à-dire du badge vers le véhicule, RF renvoie la réponse au dispositif de gestion du système.

La figure 3 représente schématiquement une procédure de communication entre le véhicule 2 et un badge lors d'une phase de roulage du véhicule. Sur cette figure 3, on retrouve comme sur la figure 2 quatre courbes correspondant chacune à un émetteur ou un récepteur. Ainsi, la courbe 22 correspond aux émetteurs LF, la courbe 24 au récepteur RF du badge, la courbe 26 à l'émetteur RF du véhicule et la courbe 28 à l'émetteur RF du badge.

Selon cette procédure, pendant une phase de roulage du véhicule, les antennes LF du véhicule restent muettes. Le récepteur RF du badge reste quant à lui en veille en permanence. Pendant ce temps, l'antenne émettrice RF du véhicule émet à intervalles de temps réguliers des challenges. Il s'agit de challenges d'un type particulier qui ne sont envoyés que pendant les phases de roulage du véhicule pour la localisation des badges. Chaque badge présent dans l'habitacle du véhicule 2 répond alors à ces challenges en émettant une réponse (courbe 28).

L'utilisation de signaux RF pour communiquer entre le véhicule et le badge permet de communiquer avec tous les badges présents dans l'habitacle du véhicule.

Sur la figure 1, un second badge 20 a été représenté à l'intérieur de l'habitacle. Ce badge 20 se trouve dans une zone d'ombre de réception LF. Comme on peut le voir sur cette figure, ce badge 20 ne se trouve dans aucune des zones 4 et 6 d'émission des antennes LF extérieures et intérieures. Bien que se trouvant dans l'habitacle du véhicule, se second badge 20 ne peut recevoir un signal LF émis par les antennes extérieures et/ou intérieures. Ainsi, si le second badge 20 est oublié à l'intérieur du véhicule 2, le conducteur pourra condamner et décondamner son véhicule et le faire démarrer à l'aide de son premier badge 10. Toutefois, le conducteur ne sait pas forcément que le second badge se trouve à l'intérieur du véhicule. Si ce second badge est visible de l'extérieur, une personne mal intentionnée pourra se saisir de ce badge, par effraction, et démarrer le véhicule comme s'il en était le propriétaire.

Le procédé de communication décrit en référence à la figure 3 permet d'éviter ce problème. En effet, comme indiqué plus haut, tous les badges présents dans le véhicule sont détectés car la portée d'émission de l'antenne RF, tant l'antenne du véhicule que celle du badge, couvre largement tout l'habitacle du véhicule.

L'invention propose alors également un procédé permettant de signaler au conducteur la présence d'un badge se trouvant dans une zone d'ombre d'émission LF. Un signal LF de localisation est alors émis par les antennes émettrices LF intérieures. Ce signal est reçu par tous les badges se trouvant dans les zones 6 (figure 1) à l'intérieur de l'habitacle du véhicule. On suppose ici que les badges sont en permanence en veille RF. Un signal "classique" de type RF est alors émis vers les badges et ceux qui ont à la fois reçu le signal LF et le signal RF répondent par un signal RF. Le dispositif de gestion mémorise alors quels badges envoient une réponse suite à l'envoi du signal LF. Par la suite, pendant une phase de roulage du véhicule, les badges se trouvant à l'intérieur du véhicule 2 sont sollicités par une requête particulière de localisation de type RF. Tous les badges, même ceux se trouvant dans une zone d'ombre d'émission LF, répondent alors à cette requête. Le dispositif de gestion du système mains libres du véhicule compare alors la liste des badges répondant suite à la requête LF et la liste de badges mémorisée. Si ces deux listes diffèrent, le dispositif de gestion signale alors au conducteur qu'un badge se trouve en zone d'ombre d'émission LF.

Les procédures de communication décrites ci-dessus permettent donc de détecter tous les badges présents à l'intérieur de l'habitacle du véhicule. Ainsi, lors d'une procédure de condamnation du véhicule, le système mains libres doit garantir qu'il n'y a aucun badge à l'intérieur du véhicule. En effet, si un badge restait dans le véhicule, il se pourrait que par modification des zones 4 et 6 d'émission LF ce badge devienne visible par les antennes émettrices LF extérieures et permettrait alors à une tierce personne de venir décondamner le véhicule, récupérer le badge et aussi démarrer ce véhicule.

Les procédés de communication décrits ci-dessus permettent de résoudre ces problèmes qui surviennent avec les procédés de communication de l'art antérieur selon lesquels le véhicule envoie un challenge au badge par émission d'un signal LF et le badge répond au véhicule par l'émission d'un signal RF.

La présente invention ne se limite pas aux procédures décrites ci-dessus à titre d'exemples non limitatifs mais englobe toutes les variantes de mise en oeuvre à la portée de l'homme du métier dans le cadre des revendications ci-après.

## Revendications

1. Procédé de communication entre un badge (10, 20) et un véhicule (2) selon lequel un émetteur de faible portée associé au véhicule émet un signal de type Basse Fréquence, ci après désigné LF, en direction du badge (10, 20) qui répond en envoyant un signal de type Radio Fréquence, ci après désigné RF, de plus grande portée en direction du véhicule, **caractérisé en ce qu'**une recherche des divers badges présents dans le véhicule est réalisée en émettant un signal de type RF (26) par un émetteur correspondant du véhicule, ce signal étant porteur d'une question posée au badge en vue de l'identification de ce dernier, et **en ce que** le badge répond par l'émission d'un signal de type RF, (28) porteur d'une réponse à la question reçue.

2. Procédé de communication selon la revendication 1, dans lequel le véhicule émet à l'intérieur du véhicule un signal de type LF et selon lequel en réponse à ce signal, chaque badge ayant capté le signal de type LF émis émet à son tour un signal de type RF, ce signal comportant des informations permettant d'identifier le badge correspondant, **caractérisé en ce qu'**il comporte en outre les étapes suivantes :
- mémorisation de la liste des badges ayant répondu suite à une localisation de badge par envoi d'un signal de type LF,
- émission d'un signal de type RF par un émetteur correspondant du véhicule, ce signal étant porteur d'une question posée au badge en vue de l'identification de ce dernier,
- envoi d'une réponse avec un signal de type RF du badge vers le véhicule,
- comparaison de la liste des badges identifiés par l'identification de type RF/RP avec la liste des badges mémorisée, afin de gérer une liste de badges présents dans le véhicule.

3. Procédé de communication selon la revendication 2, **caractérisé en ce qu'**un signal est donné au conducteur du véhicule s'il apparaît lors de l'identification de type RF/RF des badges non mémorisés.

4. Procédé de communication selon l'une des revendications 2 ou 3, **caractérisé en ce que** l'identification de badges de type RF/RF n'est réalisée que lors des phases de roulage du véhicule.

## Claims

1. Method of communication between a fob (10, 20) and a vehicle (2) according to which a low-range transmitter associated with the vehicle emits a signal of the low-frequency type (hereinafter referred to as the LF type) in the direction of the fob (10, 20) which replies by sending a signal of the higher-range radio-frequency type (hereinafter referred to as the RF type) in the direction of the vehicle, **characterised in that** a search is made of the various fobs present in the vehicle by the emission of a signal of the RF type (26) from a corresponding transmitter in the vehicle, said signal carrying a query aimed at the fob in order to identify said fob, and **in that** said fob replies by emitting a signal of the RF type (28) carrying a response to the query received.

2. Method of communication according to claim 1, wherein the vehicle emits a signal of the LF type within said vehicle and according to which, in response to said signal, each fob having picked up the emitted signal of the LF type emits in turn a signal of the RF type, said signal containing the information allowing the corresponding fob to be identified, **characterised in that** said method also comprises the following steps:
- memorising the list of fobs having replied following the sending of a signal of the LF type locating the fob,
- the emission of a signal of the RF type from a corresponding transmitter in the vehicle, said signal carrying a query aimed at the fob in order to identify said fob,
- the sending of a response with a signal of the RF type from the fob towards the vehicle,
- comparing the list of fobs identified by the RF/RF type of identification with the list of memorised fobs in order to manage a list of fobs present in the vehicle.

3. Method of communication according to claim 2, **characterised in that** a signal is given to the driver of the vehicle if during the RF/RF type of identification fobs which are not memorised appear.

4. Method of communication according to one of claims 2 or 3, **characterised in that** the RF/RF type of identification of fobs is only carried out whilst the vehicle is moving.

## Patentansprüche

1. Verfahren zur Kommunikation zwischen einer Karte (10, 20) und einem Fahrzeug (2), gemäß dem ein Sender mit geringer Reichweite, der dem Fahrzeug zugehörig ist, ein Niederfrequenzsignal, im Folgenden NF-Signal genannt, in Richtung der Karte (10, 20) aussendet, die antwortet, indem sie ein Hochfrequenzsignal, im Folgenden HF-Signal genannt, in Richtung des Fahrzeugs aussendet, **dadurch gekennzeichnet, dass** eine Suche nach den verschiedenen Karten, die in dem Fahrzeug vorhanden sind, durchgeführt wird, indem ein HF-Signal (26) durch einen entsprechenden Sender des Fahrzeugs ausgesendet wird, wobei dieses Signal Träger einer Anfrage ist, die der Karte zum Zweck der Identifizierung letzterer gestellt wird, und **dadurch**, dass die Karte mit dem Aussenden eines HF-Signals (28) antwortet, das Träger einer Antwort auf die empfangene Anfrage ist.

2. Verfahren zur Kommunikation nach Anspruch 1, bei dem das Fahrzeug im Inneren des Fahrzeugs ein NF-Signal aussendet und gemäß dem als Antwort auf dieses Signal jede Karte, die das ausgesendete NF-Signal erfasst hat, ihrerseits ein HF-Signal aussendet, wobei dieses Signal Informationen umfasst, die es ermöglichen, die entsprechende Karte zu identifizieren, **dadurch gekennzeichnet, dass** es außerdem die folgenden Schritte umfasst:
- Speichern der Liste der Karten, die auf eine Lokalisierung der Karte mit dem Senden eines NF-Signals antworten,
- Aussenden eines HF-Signals durch einen entsprechenden Sender des Fahrzeugs, wobei dieses Signal Träger einer Anfrage ist, die an die Karte zum Zweck der Identifizierung letzterer gestellt wird,
- Senden einer Antwort mit einem HF-Signal der Karte an das Fahrzeug,
- Vergleichen der Liste der durch die HF/HF-Identifizierung identifizierten Karten mit der gespeicherten Liste der Karten, um eine Liste von Karten zu verwalten, die im Fahrzeug vorhanden sind.

3. Verfahren zur Kommunikation nach Anspruch 2, **dadurch gekennzeichnet, dass** ein Signal an den Fahrer des Fahrzeugs gegeben wird, wenn bei der HF/HF-Identifizierung nicht gespeicherte Karten auftauchen.

4. Verfahren zur Kommunikation nach einem der Ansprüche 2 oder 3, **dadurch gekennzeichnet, dass** die HF/HF-Identifizierung der Karten nur während der Phasen durchgeführt wird, in denen das Fahrzeug fährt.
